Europäisches Patentamt

European Patent Office

Office européen des brevets

(11) Veröffentlichungsnummer: **0 194 406**
**A1**

## (12) EUROPÄISCHE PATENTANMELDUNG

(21) Anmeldenummer: **86100100.6**

(22) Anmeldetag: **07.01.86**

(51) Int. Cl.⁴: **B 01 D 39/08**

(30) Priorität: 09.03.85 DE 8506957 U

(43) Veröffentlichungstag der Anmeldung:
17.09.86 Patentblatt 86/38

(84) Benannte Vertragsstaaten:
AT BE CH DE FR GB IT LI NL SE

(71) Anmelder: Scheibler Peltzer GmbH & Co.
Grüner Dyk 30-32
D-4150 Krefeld(DE)

(72) Erfinder: Schneider, Axel
Moerser Strasse 373
D-4150 Krefeld(DE)

(74) Vertreter: Stark, Walter, Dr.-Ing.
Moerser Strasse 140
D-4150 Krefeld(DE)

(54) Filtermatte zum Abscheiden feiner Feststoffpartikel aus heissen Gasen.

(57) Die Erfindung betrifft eine Filtermatte zum Abscheiden feiner Feststoffpartikel aus heißen Gasen, bestehend aus einem Flächengebilde aus temperaturbeständigen Fasern. Eine Filtermatte, die bei Temperaturen über 250°C beständig ist, besteht aus einem Florstoff mit gewebten oder vermaschten Kohlefasern.

Scheibler Peltzer GmbH & Co., Grüner Dyk 30-32,
4150 Krefeld

**Filtermatte zum Abscheiden feiner Feststoffpartikel
aus heißen Gasen**

Die Erfindung betrifft eine Filtermatte zum Abscheiden
feiner Feststoffpartikel aus heißen Gasen, bestehend
aus einem Flächengebilde aus temperaturbeständigen
Fasern.

Für verschiedenste Zwecke, z.B. zur Einhaltung von
Abgasvorschriften der Luftreinhaltung oder bei der
Herstellung von staubfreien Prozeßgasen zum Trocknen,
Backen, Sintern, Vorwärmen und dergleichen müssen
heiße Gase gereinigt werden. Unter wirtschaftlichen
Gesichtspunkten ist die Reinigung mit Schlauch- bzw.
Taschenfiltern am günstigsten.

Herkömmliche Schlauch- bzw. Taschenfilter sind aus
synthetischen Fasern aufgebaut, die im Dauerbetrieb
jedoch nur Temperaturen bis maximal 200° C aushalten
und bei höheren Temperaturen immer weniger widerstandsfähig werden. Die Temperaturbeständigkeit synthetischer
Fasern kann durch Veredelung geringfügig angehoben
worden, so daß eine maximale Temperaturdauerbelastung
bei etwa 250° C liegt. Bei Funkenflug oder Heißgassträhnen
besteht jedoch die Gefahr, daß das Filter durchbrennt.

Bekannt sind auch aus Glasfasern aufgebaute Schlauch-
bzw. Taschenfilter, deren maximale Temperaturbelastung
jedoch ebenfalls bei ca. 250° C liegt. Hinzu kommt,
daß Glasfasern z.B. bei Chlor- oder Flourbelastung,
nicht ausreichend resistent sind. Sie können auch
nur geringe mechanische Beanspruchungen vertragen.

Der Einsatz dieser bekannten Filtermaterialien erfordert
ein kostenaufwendiges Abkühlen der zu reinigenden
Gase auf Temperaturen unter 200° C. Dabei wird häufig
der Taupunkt unterschritten und es können chemische
Verbindungen, z.B. Schwefelsäure, auskondensieren.
Eine Wärmeausnutzung oder Wärmerückgewinnung aus den
heißen Gasen ist kaum möglich, ohne die Gefahr von
Verschmutzung und Kondenswasserbildung in den Wärmetauscheraggregaten. Ferner sind auch chemische oder
katalytische Nachbehandlungen praktisch nicht möglich,
da derartige Nachbehandlungen regelmäßig Temperaturen
über 200° C erfordern.

Aufgabe der Erfindung ist es, eine Filtermatte anzugeben,
die bei Temperaturen über 250° C beständig ist.

Diese Aufgabe wird gelöst mit einer Filtermatte der
eingangs beschriebenen Gattung, die gekennzeichnet
ist durch einen Florstoff mit gewebten oder vermaschten
anorganischen Fasern, wie Mineralfasern, Kohlefasern,
Glaskeramikfasern. Vorzugsweise sollen die Fasern
zu Fäden versponnen sein.

Die erfindungsgemäße Filtermatte bildet eine dreidimensionales Filtermedium, welches durch Verweben seiner
Fasern den erforderlichen Zusammenhang und die mechanische Festigkeit erhält. Die von der Maschenweite

- 3 -

unabhängige Filterwirkung ergibt sich aus dem Florbesatz,
der bei dichter Anordnung von feinen Fasern und Fäden
auch feinste Staubteilchen aus den heißen Gasen herausfiltern kann.

Eine bevorzugte Ausführung ist gekennzeichnet durch
ein Grundgewebe aus gesponnenen oxydierten Glasfasern
bzw. Glas-Keramikfasern, in das gesponnene Kohlefaserfäden
als Polfäden eingebunden sind. Oxydierte (veredelte)
Glasfasern bzw. Glas-Keramikfasern sind auch bei Temperaturen über 250° C hinreichend beständig und mechanisch
fest, - wenn auch ihre Sprödigkeit mit zunehmender
Temperaturbeständigkeit zunimmt. Der nachteilige Einfluß
der zunehmenden Sprödigkeit dieser Mineralfasern wird
dadurch reduziert, daß man sie als versponnene Garne
zum Teil vermischt mit Metallfasern oder mit Metallseelen
verarbeitet.

Das Grundgewebe kann durch Metallfäden, insbesondere
aus Edelstahl, verstärkt werden, wobei diese Metallfäden
nicht nur den Zusammenhalt des Grundgewebes und seine
mechanische Festigkeit verbessern sondern bei entsprechender Ausbildung des Gewebes oder Gewirkes auch als
Scheuerschutz dienen können, wenn sie vorwiegend auf
der Rückseite der Filtermatte angeordnet sind.

Im folgenden wird ein in der Zeichnung dargestelltes
Ausführungsbeispiel der Erfindung erläutert; es zeigen:

Fig. 1 in schematischer Darstellung einen Schnitt
durch eine Filtermatte,

Fig. 2 in vergrößerter Darstellung einen Ausschnitt
aus Fig. 1.

Die dargestellte Filtermatte besteht aus einem Grundgewebe 1 aus Mineralfasern und zusätzlich eingewebten Edelstahlfäden. In das Grundgewebe 1 sind Polfäden 2 aus Kohlefasern eingebunden, die auf der Oberseite der Filtermatte einen durchgehenden und dichten Flor 3 bilden, der auch feinste Staubteilchen aus den zu behandelnden Gasen herausfiltert.

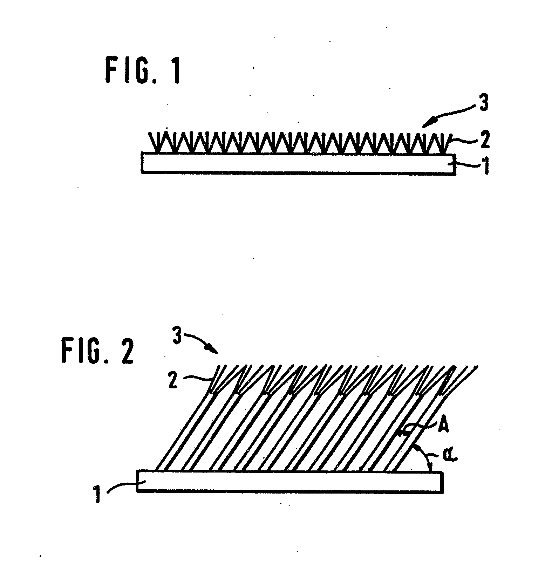

In Fig. 2 sind die Polfäden 2 aus Kohlefasern mit größeren Fadenlängen unter einer bestimmten Schräglage (Winkel a) eingebunden. Die gesponnenen Polfäden 2 sind an den Enden aufgefächert und bilden den Flor 3. Die parallel verlaufenden Polfäden 2 bilden eine Beruhigungszone, die den Druckfluß bzw. den Durchströmdruck des zu filternden Gases vergleichmäßigt.

Bei der dargestellten Ausführung beträgt der Winkel $\alpha$ ca. 60° zur Filterebene. Der Winkel $\alpha$ bzw. die Schräglage der Polfäden 2 und der Abstand A der Polfäden 2 sind so aufeinander abgestimmt, daß die Filterwirkung einerseits und die Beruhigung der Strömung andererseits optimiert werden.

0194406

Ansprüche:

1. Filtermatte zum Abscheiden feiner Feststoffpartikel
   aus heißen Gasen, bestehend aus einem Flächengebilde
   aus temperaturbeständigen Fasern, gekennzeichnet
   durch einen Florstoff mit gewebten oder vermaschten
   anorganischen Fasern (2), wie Mineralfasern, Kohlefasern oder Glas-Keramikfasern.

2. Filtermatte nach Anspruch 1, dadurch gekennzeichnet,
   daß die Fasern zu Fäden versponnen sind.

3. Filtermatte nach Anspruch 1 oder 2, gekennzeichnet
   durch ein Grundgewebe (1) aus anorganischen Fäden,
   z.B. Glaskeramik mit Metallfasern versponnen, in
   das gesponnene Kohlefasern als Polfäden (2) eingebunden
   sind.

4. Filtermatte nach einem der Ansprüche 1 bis 3, dadurch
   gekennzeichnet, daß das Grundgewebe (1) durch Metallfäden verstärkt ist.

5. Filtermatte nach Anspruch 4, gekennzeichnet durch
   Edelstahlfäden.

6. Filtermatte nach einem der Ansprüche 1 bis 5, dadurch
   gekennzeichnet, daß die Polfäden so lang ausgebildet

- 2 -

sind, daß zwischen dem Grundgewebe (1) und der
Filterebene mit Flor (3) eine Gas-Beruhigungszone
durch parallel stehende Polfäden (2) besteht.

7. Filtermatte nach Anspruch 6, dadurch gekennzeichnet,
daß die parallel stehenden Polfäden in der Beruhigungszone unter einem Winkel ($\angle$) zur Filterebene geneigt
sind.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-1 833 315 (H.H. BURHANS) <br><br> * Anspruch 1; Zeilen 17-39,54-83; Figuren 4,5 * | 1,2,6, 7 | B 01 D 39/08 |
| A | DE-U-1 819 296 (G. VOSS) <br> * Ansprüche 1,2 * | 1 | |
| A | DE-A-2 521 334 (INTERGLAS-TEXTIL) <br> * Ansprüche 1-7; Figuren 1,2 * | 3-5 | |
| A | DE-A-2 914 113 (INDUSTRIE-WERT) <br> * Anspruch 1; Figuren * | 3-5 | |

RECHERCHIERTE SACHGEBIETE (Int. Cl 4)

B 01 D

Der vorliegende Recherchenbericht wurde für alle Patentansprüche erstellt.

| Recherchenort <br> DEN HAAG | Abschlußdatum der Recherche <br> 30-05-1986 | Prüfer <br> POLESAK, H.F. |
|---|---|---|